# EUROPÄISCHE PATENTSCHRIFT

(11) **EP 3 010 779 B1**
(45) Veröffentlichungstag und Bekanntmachung des Hinweises auf die Patenterteilung: **29.04.2020**
(21) Anmeldenummer: 14711225.4
(22) Anmeldetag: 17.03.2014
(51) Int. Cl.: B62D 1/16, B29C 70/38

(54) **LENKSÄULE FÜR EIN KRAFTFAHRZEUG UND VERFAHREN ZUR HERSTELLUNG EINER LENKSÄULE**
STEERING COLUMN FOR A MOTOR VEHICLE AND METHOD FOR PRODUCING A STEERING COLUMN
COLONNE DE DIRECTION POUR VÉHICULE À MOTEUR ET PROCÉDÉ DE FABRICATION D'UNE COLONNE DE DIRECTION

(30) Priorität: 20.06.2013 AT 5042013; 26.08.2013 DE 102013014032
(43) Veröffentlichungstag der Anmeldung: 27.04.2016
(73) Patentinhaber: thyssenkrupp Presta AG, 9492 Eschen (LI)
(72) Erfinder: HEITZ, Thomas, 9493 Mauren (LI); REGNER, Sebastian, 88138 Hergensweiler (DE); SCHACHT, Arne, 6800 Feldkirch (AT)
(74) Vertreter: thyssenkrupp Intellectual Property GmbH
(86) Internationale Anmeldenummer: PCT/EP2014/055291
(87) Internationale Veröffentlichungsnummer: WO 2014/202247

(56) Entgegenhaltungen:
- EP-A2- 0 091 671
- DE-A1-102004 007 313
- DE-A1-102011 055 357
- DE-A1-102011 114 675
- DE-B3-102012 005 434
- FR-A1- 2 971 476
- GB-A- 2 379 637
- JP-A- H05 269 868

## Beschreibung

Die vorliegende Erfindung betrifft ein Verfahren zur Herstellung von Komponenten für eine Lenksäule nach dem Oberbegriff des Anspruchs 1 oder 2 sowie eine derartige Lenksäule für ein Kraftfahrzeug nach dem Oberbegriff des Anspruchs 6.

Die Lenksäule eines Kraftfahrzeugs übernimmt die Lagerung des oberen Lenkstrangs, bestehend aus einer ein- oder mehrteiligen Welle mit Schnittstellen zum Lenkrad und zur Lenkzwischenwelle. Die Lenkzwischenwelle wird an die Lenksäule angekoppelt und stellt die Verbindung zum Lenkgetriebe her. Weiterhin ermöglicht die Lenksäule die Positionierung des Lenkrads gegenüber dem Fahrer.

Die DE 10 2005 034 952 B3 offenbart beispielsweise eine Lenksäule, die in ihrer Höhe und ihrer Neigung verstellbar ist. Eine Lenkspindel wird in einem Stellteil, das auch als Manteleinheit, Mantelrohr oder Lenkspindellagereinheit bezeichnet wird, drehbar gelagert. Die Manteleinheit ist in einem Halteteil gehalten und das Halteteil ist in einer Halteklammer, die an einer Fahrzeugkarosserie befestigt werden kann, gelagert. Zur Anpassung der Position der Lenkspindel, beziehungsweise eines daran zu befestigenden Lenkrades, ist ein Klemmsystem vorgesehen, das zwischen einer geöffneten Stellung und einer geschlossenen Stellung mit einem Stellhebel verstellbar ist. In der geöffneten Stellung des Klemmsystems kann die Manteleinheit in ihrer Längsrichtung in Bezug zum Halteteil verschoben werden und gleichzeitig das Halteteil in seiner Neigung um eine Schwenkachse gegenüber der Halteklammer verschwenkt werden. In der geschlossenen Stellung des Klemmsystems ist die Lenkspindel gegenüber der karosseriefesten Halteklammer fixiert. Derartige Lenksäulen und Klemmsysteme sind im Stand der Technik in verschiedenen Ausführungen bekannt.

Darüber hinaus leistet die Lenksäule einen erheblichen Beitrag für die Fahrsicherheit. Im Falle eines Unfalls, beim Aufprall des Fahrers auf den Airbag, gibt die Lenksäule definiert nach.

Ein Zielkonflikt bei der technischen Auslegung der Lenksäule ist die Anforderung an Bauraum, Steifigkeit und Gewicht. Zur Zeit werden gattungsgemäße Lenksäulen und ihre Komponenten bevorzugt aus Stahl, Blech, Aluminium- oder Magnesiumguss hergestellt.

Es ist jedoch wünschenswert, das Gewicht der Lenksäule und ihrer Bauelemente bei mindestens gleich bleibenden Festigkeits- und Steifigkeitseigenschaften zu reduzieren. Diese Reduzierung würde zur günstigen Beeinflussung des Kraftstoffverbrauchs und zur Verbesserung der Fahrdynamik von Kraftfahrzeugen sowie zur Erhöhung der Reichweite von Elektromobilen führen.

Eine Minimierung des Eigengewichts bei gleichbleibender Steifigkeit und Festigkeit lässt sich durch die Verwendung von spezifischen Werkstoffen wie zum Beispiel von Faserverbundwerkstoffen erreichen.

Faserverbundwerkstoffe bestehen aus verstärkenden Fasern die in einer Matrix eingebettet sind. Im Allgemeinen gilt, dass die spezifische Steifigkeit eines Faserverbundwerkstoffs oder eines Hybridwerkstoffs aus Metall und Faserverbundmaterial höher ist als die von Metall allein. Die höherwertigen Eigenschaften werden erst durch das Zusammenspiel beider Komponenten erreicht. Es gibt eine Vielzahl von Herstellungsverfahren in denen die mit einem Matrixwerkstoff vorimprägnierten Fasern verarbeitet werden. Eines der etablierten Herstellungsverfahren ist das Faserwickelverfahren. Bei dem Faserwickelverfahren werden Endlosfaserstränge (Rovings) in einem kontinuierlichen Prozess auf einen Wickelkern gewickelt. Dabei werden die Fasern häufig im selben Arbeitsgang mit einem Matrixharz durchtränkt und nass imprägniert oder es werden ungetränkte Fasern verarbeitet, die nach dem Wickelprozess mit einem Harzinjektionsverfahren getränkt werden. Das Faserwickelverfahren zeichnet sich durch eine hohe Laminatqualität und eine hohe Genauigkeit im Faserharzgehalt und in der Faserorientierung bei gleichzeitig hohem Automatisierungsgrad und hoher Wirtschaftlichkeit aus.

In der EP 1 268 164 B1 sind ein fachwerkartiges Bauteil aus faserverstärktem Kunststoff und ein Verfahren zur Herstellung desselben offenbart. Die Herstellung des fachwerkartigen Bauteils erfolgt in Abhängigkeit von der zu erwartenden oder vorgegebenen Belastung durch das Faserwickelverfahren. Dazu sind eine Anzahl von Wickelspulen auf einer Wickelplatte vorgesehen, um die die vorimprägnierte Faser gewickelt wird. Die Hohlräume zwischen den so entstehenden Außengurtteilen und der Zwischenstruktur sind wenigstens bereichsweise mit einem Füllmaterial ausgefüllt. Das Füllmaterial stützt die auf Druck belasteten Abschnitte der fachwerkartigen Zwischenstruktur und verhindert ein unkontrolliertes Ausknicken bei Überschreitung der Belastung, für die sie ausgelegt sind. Fachwerkartige Strukturen zeichnen sich durch ihr hohes Maß an Stabilität aus. Es ist vorgesehen diese Elemente als Träger z.B. in einem Fahrzeugchassis einzusetzen, wobei das Füllmaterial u.a. die Energieaufnahme im Crashfall begünstigt. Durch die vorgegebene fachwerkartige Struktur kann die Form und der Verlauf der Verstärkung das Trägerbauteil nicht individuell gestaltet werden. Zwar kann die Verstärkung der Belastung durch eine unterschiedliche Anzahl von Fasern angepasst werden, aber eine spezifische Ausgestaltung entlang von Kraftlinien eines Bauteils ist nicht möglich.

Die EP 00091671 A2 offenbart eine Sicherheitslenksäule, bei der zumindest ein Rohrteil als Faserverbundbauteil ausgebildet ist. Das Rohr wird vorzugsweise durch Umwickeln in Wickeltechnik hergestellt, und erfordert dabei einen günstig deformierbaren Kern. Eine spezifische Ausgestaltung des Bauteils entlang von Kraftlinien ist auch hier nicht möglich.

Es ist daher die Aufgabe der vorliegenden Erfindung individuell ausgeformte Bauteile, für eine Lenksäule und deren Komponenten eines Kraftfahrzeuges in Fasertechnologie zu schaffen, die hohe Festigkeitseigenschaften und Steifigkeitseigenschaften und ein geringes Gewicht aufweisen. Weiterhin soll eine Konstruktion für derartige Bauteile geschaffen werden, die eine definierte Auslegung der Bauteile ermöglicht.

Diese Aufgabe wird von einem Verfahren mit den Merkmalen des Anspruchs 1 oder 2 und von einer Lenksäule und deren Komponenten mit den Merkmalen des Anspruchs 6 gelöst. In den Unteransprüchen sind vorteilhafte Weiterbildungen der Erfindung dargestellt.

Danach ist ein Verfahren zur Herstellung einer Lenksäule und ihrer Komponenten vorgesehen, insbesondere für Kraftfahrzeuge, das folgende Schritte aufweist:
a) Wickeln von Fasern entlang vorgegebener Bahnen um wenigstens eine Wickelspule eines Wickelkerns;
b) Einbringen eines aushärtbaren Harzes in die Fasern;
c) Aushärten des Harzes und Bildung des Faserverbundbauteils;
d) Entnahme der wenigstens einen Wickelspulenach innen in den Wickelkern;
e) Entnahme des Wickelkerns und Freisetzen des Faserverbundbauteils;
f) Montage der Lenksäule unter Einbau des Faserverbundbauteils in die Lenksäule.

In einer bevorzugten Ausführungsform erfolgt nach dem Schritt a) das Verbringen des umwickelten Wickelkerns in eine Werkzeugform und nach dem Schritt c) die Entnahme des Faserverbundbauteils inklusive Wickelkern aus der Werkzeugform. Im Schritt b) wird dann das Harz in die Werkzeugform eingebracht.

In einer alternativen Ausführungsform sind die Fasern bereits vor dem Wickeln mit einem aushärtbaren Harz getränkt, so dass das nachträgliche Einbringen des aushärtbaren Harzes auch entfallen kann. Entsprechend ergibt sich eine geringfügig veränderte Abfolge, die aber zu demselben Ergebnis führt. In dieser alternativen Ausführung umfasst das Verfahren folgende Schritte:
a) Wickeln von Fasern entlang vorgegebener Bahnen um wenigstens eine Wickelspule eines Wickelkerns, wobei die Fasern mit einem aushärtbaren Harz getränkt sind;
b) Aushärten des Harzes und Bildung des Faserverbundbauteils;
c) Entnahme der wenigstens einen Wickelspule nach innen in den Wickelkern;
d) Entnahme des Wickelkerns und Freisetzen des Faserverbundbauteils;
e) Montage der Lenksäule unter Einbau des Faserverbundbauteils in die Lenksäule.

In einer bevorzugten Ausführungsform erfolgt nach dem Schritt a) das Verbringen des umwickelten Wickelkerns in eine Werkzeugform und nach dem Schritt c) die Entnahme des Faserverbundbauteils inklusive Wickelkern aus der Werkzeugform

Besonders bevorzugt ist die Anwendung des Verfahrens für eine Lenksäule, bei der das Mantelrohr, das verallgemeinert auch als Lenkspindellagereinheit oder Manteleinheit bezeichnet werden kann, in einem Schwenkhebel entlang der Längsachse der Lenkspindel verschiebbar geführt, und wobei der Schwenkhebel um eine Schwenkachse in der Konsole schwenkbar gelagert ist. Dadurch wird eine höhen- und längenverstellbare Lenksäule in einer Leichtbauweise dargestellt.
Durch die Wicklung der Fasern werden Faserstränge gebildet.
Vorzugsweise werden in einem Verfahrensschritt vor dem Wickeln ein oder mehrere Funktionselemente an vordefinierten Stellen auf dem Wickelkern beziehungsweise auf den Wickelspulen positioniert, um durch die daran anschließenden Verfahrensschritte mit den Fasern verbunden zu werden, um mit dem Faserverbundteil ein einstückiges Bauteil zu bilden. Die Funktionselemente verbleiben in dem Bauteil, sie bilden Schnittstellen und Funktionsflächen aus, die nicht effizient gewickelt werden können.
Zudem kann bevorzugt vorgesehen sein, dass in einem Verfahrensschritt vor dem Wickeln ein Hilfsmaterial auf den Wickelkern aufgebracht wird, das die Fasern in Form und Lage hält, bis diese durch Aushärten des Harzes fixiert sind. Dieses Hilfsmaterial kann ein Gewebe oder ein Gelege sein, das mit der Matrix ebenso einen Faserverbund bildet und zur Aufnahme von Grundlasten, zur Einleitung von Lasten oder als kraftfreie Struktur dient.
Weiterhin ist eine Lenksäule für ein Kraftfahrzeug vorgesehen, mit einer in einer Manteleinheit um eine Längsachse drehbar gelagerten Lenkspindel, wobei die Manteleinheit in einer Konsole gelagert ist, die dazu ausgebildet ist, die Manteleinheit mit einer Karosserie des Kraftfahrzeuges zu verbinden, die mindestens ein Bauteil aus faserverstärkten Verbundwerkstoff aufweist, welches nach einem der vorhergehend beschriebenen Verfahren gefertigt ist.

Besonders bevorzugt ist dabei eine Lenksäule, bei der das Mantelrohr, das verallgemeinert auch als Lenkspindellagereinheit oder Manteleinheit bezeichnet werden kann, in einem Schwenkhebel entlang der Längsachse der Lenkspindel verschiebbar geführt und der Schwenkhebel um eine Schwenkachse in der Konsole schwenkbar gelagert ist, wobei die Konsole und/oder der Schwenkhebel und/oder die Manteleinheit aus faserverstärktem Verbundwerkstoff entsprechend dem erfindungsgemäßen Verfahren gebildet ist. Dadurch wird eine höhen- und längenverstellbare Lenksäule in einer Leichtbauweise dargestellt.

Das Bauteil liegt vorzugsweise im Kraftfluss der Lenksäule zwischen der Lenkspindel und der Karosserie, wie dies insbesondere für die Konsole, den Schwenkhebel und die Manteleinheit gegeben ist, und weist entlang des Kraftflusses faserverstärkten Kunststoff auf, bei dem die Fasern gewickelt sind.

Nach einer bevorzugten Ausführungsform ist der faserverstärkte Kunststoff eine Kombination verschiedenartiger Faserstrukturen mit gleichgerichteten Fasern.

Vorzugsweise weist das Bauteil Faserstränge auf, deren Fasern entlang einer Hauptkraftflussrichtung zwischen einer Auswahl aus jeweils zwei Funktionselementen, mit denen die Lenksäulenkomponente abgestützt ist, in im Wesentlichen gerader Linie und zueinander im Wesentlichen parallel ausgerichtet sind, wobei zwischen derartig ausgebildeten Fasersträngen Raumbereiche ausgebildet sind, in denen keine Fasern und auch kein Kunststoff angeordnet sind. Mit anderen Worten sind die Fasern, zusammengefasst als Faserstränge, wie in einer Fachwerk-Tragstruktur parallel zueinander ausgerichtet. Die Einschränkung "im wesentlichen" bezieht sich auf zulässige Abweichungen, von der Geradheit oder Parallelität, in Bereich von wenigen Winkelgraden, sicher weniger als 5 oder bevorzugt weniger als 3 Winkelgrad.

Zur Darstellung von Bauteilen einer Lenksäule, insbesondere der Konsole, des Schwenkhebels oder der Lenkspindellagereinheit, ist es besonders zu bevorzugen, dreidimensionale Faserstränge auszubilden, wobei mindestens einer der Faserstränge winklig angeordnet ist zu der Ebene, die durch zumindest zwei andere Faserstränge aufgespannt wird. Entsprechend ist mit Vorzug zumindest ein Funktionselement in einer anderen Ebene, im Vergleich zur durch die zumindest zwei Faserstränge aufgespannten Ebene, angeordnet.

Weiterhin können einzelne Faserstränge stetig differenzierbar gebogen ausgebildet sein, wobei innerhalb des Faserstrangs die einzelnen Fasern im Wesentlichen parallel zueinander ausgerichtet sind. Dies ist besonders dann von Vorteil, wenn der Kraftfluss über verschiedene Ebenen hinweg geleitet werden muss, insbesondere um eine Umbiegung oder Kante geleitet werden muss und ein im Kraftfluss angeordnetes Funktionselement am Bauteil nicht vorgesehen ist. Durch die stetig differenzierbare Linienführung erfolgt die Kraftweiterleitung mit reduzierter Knickgefahr oder Kerbwirkung.

Vorzugsweise ist das Bauteil unter Verwendung eines Wickelkerns gefertigt, der vor der Montage des Bauteils in der Lenksäule von dem Bauteil getrennt und nicht in der Lenksäule enthalten ist. Dieser Wickelkern weist eine zum Verlauf der Faserstränge gegengleiche Kontur auf. Insbesondere die Ausbildung von stetig differenzierbar gebogenen Fasersträngen ist dadurch einfach möglich. Die erfindungsgemäße Lenksäule weist eine sehr hohe Steifigkeit und Robustheit auf, obgleich nur wenige Faserstränge mit großen Zwischenräumen zur Bildung des Bauteils der Lenksäule dienen. Dies wird möglich, da die Belastungen entweder entlang der Faserstränge oder quer zu den Fasersträngen über angrenzende Bauteile der Lenksäule aufgenommen werden. Das Bauteil muss entsprechend nicht die Belastungen in allen Richtungen selbst aufnehmen bzw. selbst den Belastungen standhalten.

Die vorgesehenen Funktionselemente des Bauteils sind bevorzugt ausgewählt aus der Gruppe, die Befestigungselemente, Führungen, Bewegungsbegrenzungen, Lager und Halter für Kabelbäume umfasst.

In einer weiteren Ausführungsform sind die Funktionselemente Blechlaschen mit Öffnungen, Bohrungen oder Ausnehmungen. Auch Sinterformteile oder Gussteile können als Funktionselemente der Bauteile integriert werden. Des Weiteren können auch andere Formteile aus verschiedenen Metallen oder Kunststoff als Funktionselemente eingesetzt werden. Das erfindungsgemäße Verfahren ist hier besonders flexibel.

Eine bevorzugte Ausführungsform der Erfindung wird nachfolgend anhand der Zeichnungen näher erläutert. Es zeigen:
- Fig. 1:: eine räumliche Darstellung einer vollständigen gattungsgemäßen Lenksäule,
- Fig. 2:: eine räumliche Darstellung eines Wickelkerns mit Wickelspulen und Funktionselementen,
- Fig. 3:: eine schematische Darstellung des Wickelvorgangs,
- Fig. 4:: eine räumliche Ansicht des Wickelkerns nach dem Wickelvorgang,
- Fig. 5:: eine räumliche Ansicht des Wickelkerns aus Figur 4 mit angegebener Spannrichtung,
- Fig. 6:: eine Explosionszeichnung des bewickelten Wickelkerns mit einer Werkzeugform,
- Fig. 7:: eine räumliche Darstellung der geschlossenen Werkzeugform,
- Fig. 8 und 9:: zwei räumliche Ansichten einer erfindungsgemäßen Konsole,
- Fig. 10:: eine räumliche Ansicht der erfindungsgemäßen Konsole aus Fig. 7 und Fig. 8 ohne Funktionselemente, sowie
- Fig. 11:: eine räumliche Darstellung einer erfindungsgemäßen Lenksäule.

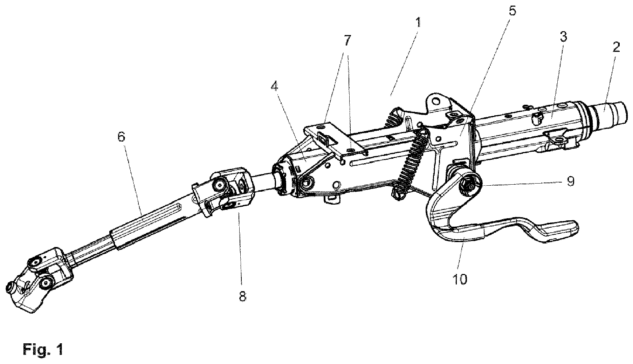

In der Figur 1 ist eine gattungsgemäße Lenksäule 1 mit einer Lenkspindel 2, einer Manteleinheit 3, einem Schwenkhebel 4, einer Konsole 5 und einem Lenkwellenteil 6 dargestellt. Die Lenkspindel 2 ist in der Manteleinheit 3 drehbar gelagert. Die Manteleinheit 3 ist in dem Schwenkhebel 4 entlang der Längsachse der Lenkspindel 2 verschiebbar geführt. Der Schwenkhebel 4 ist um eine Schwenkachse in der Konsole 5 schwenkbar gelagert. Die Konsole 5 kann dabei an Befestigungspunkten 7 an der nicht dargestellten Karosserie befestigt werden. Die von einem Fahrer über ein Lenkrad in die Lenkspindel 2 eingebrachte Drehbewegung wird über ein Kardangelenk 8 und weitere Lenkwellenteile 6 in das nicht dargestellte Lenkgetriebe eingebracht. Die Lenksäule 1 kann zur Erhöhung des Komforts des Fahrers in ihrer Höhe und ihrer Länge verstellt werden. Hierzu ist ein Fixiermechanismus vorgesehen, der einen Spannapparat umfasst. Der Spannapparat weist einen Spannbolzen 9, einen Spannhebel 10 und einen nicht gezeigten Nockenmechanismus auf. Durch Verdrehung des Spannhebels 10 werden die beiden Nocken des Nockenmechanismus gegeneinander verdreht und die Seitenwangen der Konsole 5 zusammengezogen, wodurch eine reibschlüssige Verspannung der Seitenwangen der Konsole 5 mit den Seitenflächen des Schwenkhebels 4 und wiederherum mit den Seitenflächen der Manteleinheit 3 erfolgt. Derartige Lenksäulen sind im Stand der Technik bekannt, so dass hier auf eine genaue Darstellung verzichtet wird. Alternativ zum Beispiel kann die Lagerung der Lenkspindel 2 auch in einer nicht rohrförmig ausgebildeten Lenkspindellagereinheit, die auch als Manteleinheit bezeichnet werden kann, erfolgen. Ebenso kann die Fixierung der Lenkspindellagereinheit oder der Manteleinheit 3 gegenüber der Konsole mittels eines Formschlusses, beispielsweise einer Verzahnung dargestellt sein. Derartige Lenksäulen sind beispielsweise auch mit von der Erfindung umfasst.

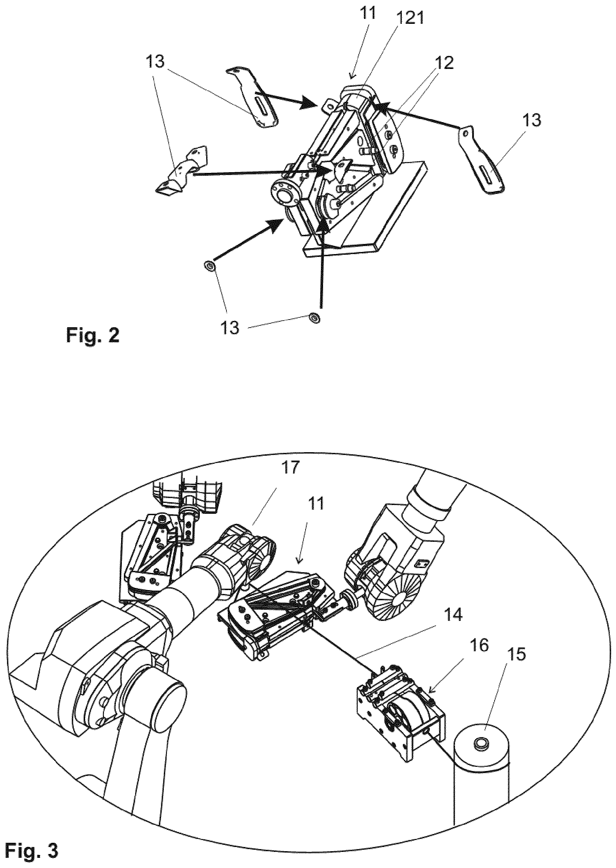

Figur 2 zeigt einen Wickelkern 11 einer erfindungsmäßen Konsole 55 mit einer Vielzahl von Wickelspulen 12, 121, sowie Funktionselementen 13. Vor dem Wickelprozess werden die Funktionselemente 13 auf dem Wickelkern 11 positioniert und während des Wickelvorgangs gemeinsam mit dem Wickelkern 11 entlang der Wickelspulen 12, 121 umwickelt. Im Sinne der Erfindung können die Wickelspulen nicht nur durch einfache zylindrische Spulen 12 gebildet sein. Jede Werkzeugform 121, um die die Rovings gewickelt werden, ist unter dem Begriff "Wickelspule" subsumiert. Nach Beendigung des Wickelprozesses wird der Wickelkern 11 entnommen, die Funktionselemente 13 hingegen verbleiben im Bauteil, sie bilden Schnittstellen und Funktionsflächen aus, die nicht effizient gewickelt werden können. Solche Funktionselemente umfassen zum Beispiel Befestigungselemente oder Lager.

Figur 3 zeigt schematisch das erfindungsgemäße Verfahren, das zur Herstellung der Komponenten einer Lenksäule aus faserverstärktem Kunststoff zum Einsatz kommt. Im Beispiel ist die Darstellung der Konsole 55 veranschaulicht. Es kann jedoch auch die Manteleinheit oder eine andere Lenkspindellagereinheit oder der Schlitten, falls vorhanden, oder ein anderes kraftübertragendes Bauteil der Lenksäule mit dieser Technologie ausgebildet werden. Eine unter Vorspannung gehaltene Faser 14 wird von einer Vorratsspule 15 abgezogen und durch eine Imprägniereinheit 16 geführt. Die Imprägniereinheit 16 kann als Tauchtränkvorrichtung oder, wie beispielsweise dargestellt, als Walzenimprägniervorrichtung ausgebildet sein. Die imprägnierte Faser 14 wird zur Bildung der Faserstränge 141, 142 mittels einer Führungseinheit 17, die mit einer rechnergesteuerten Wickelmaschine verbunden ist, auf einen mit der Führungseinheit 17 synchronisiert bewegten Wickelkern 11 einer Konsole abgelegt. Im Beispiel ist erkennbar, dass die Wickeloperation dreidimensional erfolgt, das heißt die Fasern werden nicht nur in einer Ebene gewickelt, sondern so dass eine dreidimensionale Faserstrangstruktur entsteht. Bevorzugt erfolgt diese Wickeloperation ohne Unterbrechung, so dass alle Faserstränge 141, 142 durch eine einzige fortlaufende Faser 14 gebildet sind.

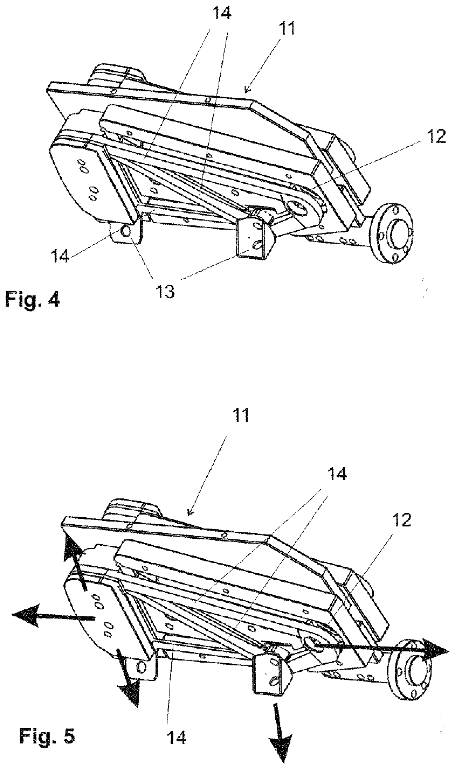

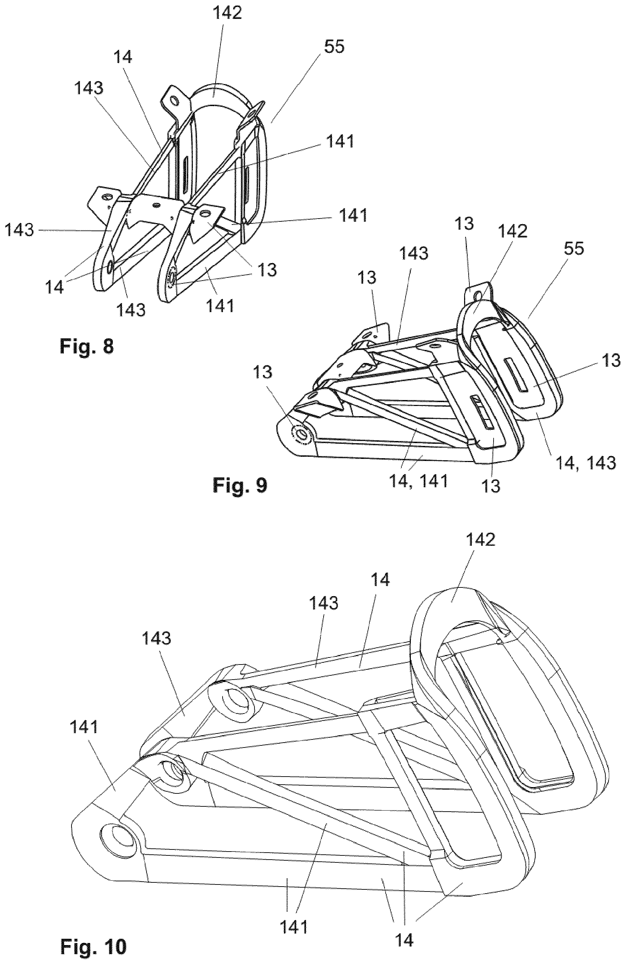

In der Figur 4 ist der Wickelkern 11 mit den Funktionselementen 13 im umwickelten Zustand dargestellt. Die von der Vorratsspule als Roving abgezogene, imprägnierte Faser wird nach einem vorgegebenen Wickelplan auf die Wickelspulen 12, 121 und um die Funktionselemente 13 abgelegt. Der Wickelplan ist entsprechend der Bauteilgeometrie festzulegen. Bei der Auslegung des Wickelplans werden die Kraftflussrichtungen in der Konsole analysiert und durch die gezielte Ablage von Fasern 14 in Kraftflussrichtung zur Bildung der Faserstränge 141, 142, 143 werden die Festigkeitseigenschaften und Steifigkeitseigenschaften des Werkstoffs optimal ausgenutzt. Dies geschieht durch Anpassung von Faservolumengehalt, Faserorientierung und Faseranzahl entsprechend dem Kraftfluss. Zudem wird durch die gezielte Ablage der Fasern das Gewicht der Konsole reduziert. Zur Fertigung der Konsole wird mindestens ein Wickelumlauf durchgeführt. Werden mehrere Wickelumläufe durchgeführt, so können sich die Fasern in den Kreuzungspunkten aus wechselnden Richtungen überkreuzen, wodurch die Festigkeit quer zur Wicklung verstärkt wird. Das Wickeln wird räumlich durchgeführt. Dazu wird der Wickelkern rechnergesteuert rotiert oder auf einer Drehachse gelagert, so dass die Fasern um den Kern herumgeführt werden können. Im Beispiel (siehe auch Fig. 8, 9) ist zu erkennen, wie die Wickelspule 121 nicht in der Ebene liegt, die durch die Faserstränge 141 oder Faserstränge 143 gebildet wird. Entsprechend wird ein Faserstrang 142 beim Umwickeln gebildet, der aus der Ebene, die durch die Faserstränge 141 oder die Faserstränge 143 gebildet wird, herausragt.

Bei dem Wickelplan ist zu berücksichtigen, dass die Fasern möglichst lange gerade geführt werden, bevor die Wickelrichtung und damit die Orientierung der Fasern geändert wird. Dadurch werden Stellen bzw. Knicke der Fasern, die einen Bruch verursachen können, minimiert. Unter dem gleichen Aspekt kann in einem weiteren Fertigungsschritt nach dem Wickeln das Spannen der Fasern, wie in Figur 5 gezeigt, vorgesehen sein.

In der Figur 5 zeigen die Pfeile die Spannrichtungen des Wickelkerns 11 an. Die Spannung kann zum Beispiel mechanisch durch Verfahren der Wickelspulen 12 erzeugt werden oder durch elastische Wickelspulen, die beim Ablegen nachgeben und sich danach zurückstellen. Durch die auf die Fasern aufgebrachte Spannung werden die Fasern vorgespannt, so dass Knicke in den Fasern reduziert werden. Dieser Prozess erhöht die Festigkeit und die Steifigkeit des Faserverbundwerkstoffs in Ablagerichtung.

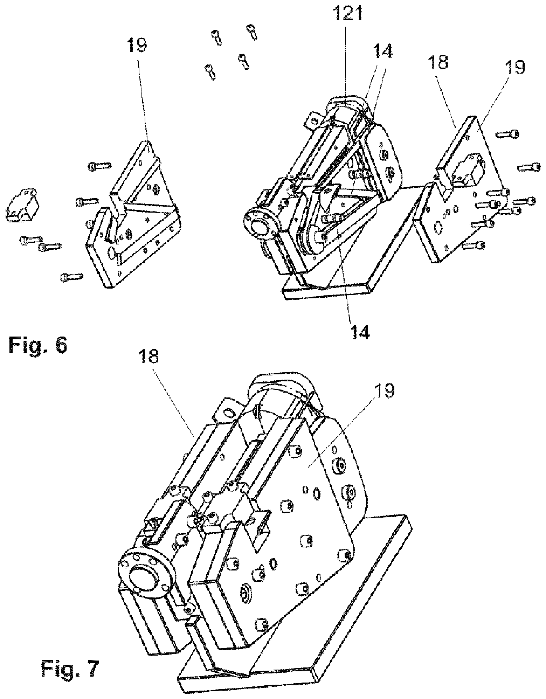

Nach dem Wickeln wird die Matrix der Faser ausgehärtet. Zur Formgebung wird im Beispiel der umwickelte Wickelkern 11 von einer Werkzeugform 18, wie in Figur 6 und Figur 7 dargestellt, umgeben. Die hier dargestellte Werkzeugform 18 weist zwei Platten 19 auf, die jeweils an einer Seite des Wickelkerns 11 mittels Schraub- oder Steckverbindungen den gewickelten Teil überdeckend angebracht werden. Die Werkzeugform 18 presst dabei die vorimprägnierten Fasern zwischen den Platten 19 und dem Wickelkern 11 in die gewünschte Form. So kann der Querschnitt des Werkstücks und der Faservolumenanteil beeinflusst werden. Danach erfolgt die Aushärtung des Werkstücks in der Werkzeugform 18 zum Beispiel über eine beheizte Werkzeugform oder durch Einbringen der Werkzeugform 18 in einen Durchlaufofen.

Nach dem Aushärten werden die Werkzeugform und der Wickelkern inklusive der Wickelspulen entfernt. Der Wickelkern ist dazu so ausgestaltet, dass die Wickelspulen nach innen in den Wickelkern entnommen werden und daraufhin der Wickelkern zu Entnahme aus der ausgehärteten Konsole freigegeben ist.

Die erfindungsgemäße ausgehärtete Konsole 55 ist in Figur 8 und Figur 9 gezeigt. Neben dem Konstrukt aus Faserverbundwerkstoff, gebildet durch die Faserstränge 141, 142, 143 sind die einzelnen umwickelten Funktionselemente 13 zu sehen. Im Beispiel ist zu erkennen, wie das Bauteil zwei parallele Ebenen durch die parallel zueinander ausgerichteten Faserstränge 141 und 143, sowie einen die beiden Ebenen verbindenden Faserstrang 142, umfasst. Figur 10 hingegen zeigt die ausgehärteten Faserstränge 141, 142 und 143 der Konsole aus den vorhergehenden Figuren ohne Funktionselemente.

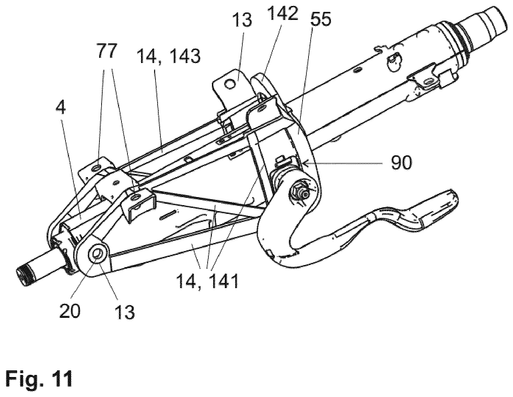

In der Figur 11 ist die erfindungsgemäße Lenksäule mit Faserverbundwerkstoff-Konsole 55 gezeigt. Die integrierten Funktionselemente 13 dienen als Lager 20 für die Schwenkachse des Schwenkhebels 4 und als Befestigungselemente 77 für die Befestigung der Konsole 55 an der hier nicht gezeigten Karosserie, sowie für die Führungselemente des Fixiersystems 90. Im Gegensatz zu gattungsgemäßen Lenksäulen, wie in Figur 1 dargestellt, weist die erfindungsgemäße Lenksäule aus Figur 11 durch den Einsatz von Faserverbundwerkstoffen ein geringes Gewicht auf, wobei ausreichende Festigkeit und Steifigkeit erreicht ist oder sogar eine erhöhte Festigkeit und erhöhte Steifigkeit erreicht ist.

Die Einsparung von Gewicht führt zu einer günstigen Beeinflussung des Kraftstoffverbrauchs sowie zur Erhöhung der Reichweite von Elektromobilen. Durch die kraftflussgerechte Gestaltung und die hohe Festigkeit in Faserrichtung kann der Bauraum klein gehalten werden. Weiterhin wird durch die erhöhte Steifigkeit der Konsole die Eigenfrequenz der Lenksäule positiv beeinflusst, so dass die Schwingungen am Lenkrad, die durch die Lenksäule übertragen werden, zur Verbesserung der Komforteigenschaften beim Fahren deutlich minimiert werden.

In einem anderen hier nicht dargestellten Ausführungsbeispiel wird der Schwenkhebel nach dem vorhergehend beschriebenen Verfahren aus Faserverbundwerkstoff hergestellt. Alle Komponenten der Lenksäule können aus Faserverbundwerkstoff hergestellt werden.

Durch die Wahl der Fasern können die Materialeigenschaften in einem großen Bereich variiert werden. Vorzugsweise werden Kohlenstofffasern, Aramidfasern und/oder Glasfasern einzeln oder in Kombination verwendet.

Wie vorhergehend beschrieben, werden bevorzugt vorimprägnierte Fasern verwendet. Vorimprägnierte Fasern weisen eine thermoplastische oder duroplastische Imprägnierung auf. Die mit einer thermoplastischen Imprägnierung versehenen Fasern können vorteilhafterweise in Kombination zum Beispiel mit Kohlenstofffasern und/oder Glasfasern zu einem Hybridgarn verarbeitet werden. Dabei ist in einem Ausführungsbeispiel vorgesehen, dass die Hybridgarne während des Wickelprozesses erwärmt werden, so dass die Thermoplastfasern aufschmelzen um schon während des Wickelns eine Matrix des Verbundes zu bilden. Danach kann in einer Werkzeugform mittels Pressen die Form des Werkstücks angepasst werden. Möglich ist auch die Aufschmelzung der thermoplastischen Fasern nach dem Wickelprozess in einem Ofen oder in einer beheizten Werkzeugform und/oder im thermoplastischen Spritzgussverfahren.

Ein anderes Ausführungsbeispiel sieht Fasern vor, die nicht vorimprägniert sind. Diese Fasern werden, wie in den vorhergehenden Ausführungsbeispielen beschrieben, gewickelt. Nach dem Wickelprozess wird die Werkzeugform montiert oder das Werkstück inklusive Wickelkern in eine Werkzeugform gelegt und die Werkzeugform mit thermoplastischem oder duroplastischem Harz injiziert und das Werkstück ausgehärtet. Für die Verwendung einer duroplastischen Matrix sind alle Formen des Resin Transfer Moulding (RTM) Verfahren vorgesehen. Im Vergleich zum Pressen wird hierbei die Matrixmasse mittels Kolben von einer meist beheizten Vorkammer über Verteilerkanäle in die Werkzeugform eingespritzt, worin sie unter Wärme und Druck aushärtet.

Zur Entnahme der gehärteten Konsole aus der Werkzeugform werden auch hier die Platten der Werkzeugform auseinandergezogen und die Wickelspulen nach innen in die Werkzeugform gezogen.

In einer weiteren Ausführungsform ist es vorgesehen, die Werkzeugform vor oder nach der Zugabe von Harz in eine Spritzgussmaschine einzulegen und mit thermoplastischem oder duroplastischem Spritzguss das Werkstück zur erweiterten Formgebung zu umspritzen oder hinterspritzen.

Ein anderes Ausführungsbeispiel sieht vor, dass das kraftflussgerechte Wickeln von Fasern auf Hilfsmaterialien wie beispielsweise Kunststoffgeweben oder Gelegen oder Geweben aus Verstärkungsfasern durchgeführt wird, die die Fasern in Form und Lage halten bis diese durch eine Matrix fixiert werden. Bei der Verwendung von Geweben und Gelegen bilden diese mit der Matrix ebenso einen Faserverbund, der zur Aufnahme von Grundlasten, zur Einleitung von Lasten oder als kraftfreie Struktur dient.

Die erfindungsgemäße Lenksäule weist individuell ausgeformte Komponenten in Fasertechnologie mit hohen Festigkeitseigenschaften und hohen Steifigkeitseigenschaften und einem geringen Gewicht auf. Weiterhin ermöglicht das erfindungsgemäße Verfahren eine definierte kraftflussgerechte Auslegung derartiger Bauteile.

## Patentansprüche

1. Verfahren zur Herstellung einer Lenksäule (1) mit einer Lenkspindel (2), die um ihre Achse drehbar in einer Manteleinheit (3) gelagert ist, wobei die Manteleinheit (3) in einer Konsole, die dazu ausgebildet ist, die Manteleinheit (3) direkt oder indirekt mit der Karosserie des Kraftfahrzeuges zu verbinden, gelagert ist und wobei zumindest eines der Bauteile der Lenksäule (1) als Faserverbundbauteil ausgebildet ist, mit folgenden Schritten:
a) Wickeln von Fasern entlang vorgegebener Bahnen um wenigstens eine Wickelspule (12) eines Wickelkerns (11);
b) Einbringen eines aushärtbaren Harzes in die Fasern;
c) Aushärten des Harzes und Bildung des Faserverbundbauteils;
d) Entnahme der wenigstens einen Wickelspule (12) nach innen in den Wickelkern (11);
e) Entnahme des Wickelkerns (11) und Freisetzen des Faserverbundbauteils;
f) Montage der Lenksäule (1) unter Einbau des Faserverbundbauteils in die Lenksäule.

2. Verfahren zur Herstellung einer Lenksäule (1) mit einer Lenkspindel (2), die um ihre Achse drehbar in einer Manteleinheit (3) gelagert ist, wobei die Manteleinheit (3) in einer Konsole, die dazu ausgebildet ist, die Manteleinheit (3) direkt oder indirekt mit der Karosserie des Kraftfahrzeuges zu verbinden, gelagert ist und wobei zumindest eines der Bauteile der Lenksäule (1) als Faserverbundbauteil ausgebildet ist, mit folgenden Schritten:
a) Wickeln von Fasern (14) entlang vorgegebener Bahnen um wenigstens eine Wickelspule (12) eines Wickelkerns (11), wobei die Fasern (14) mit einem aushärtbaren Harz getränkt sind;
b) Aushärten des Harzes und Bildung des Faserverbundbauteils;
c) Entnahme der wenigstens einen Wickelspule (12) nach innen in den Wickelkern (11);
d) Entnahme des Wickelkerns (11) und Freisetzen des Faserverbundbauteils;
e) Montage der Lenksäule (1) unter Einbau des Faserverbundbauteils in die Lenksäule.

3. Verfahren zur Herstellung einer Lenksäule (1) nach Anspruch 1 oder 2, **dadurch gekennzeichnet, dass** in einem Verfahrensschritt vor dem Wickeln ein oder mehrere Funktionselemente (13) an vordefinierten Stellen auf dem Wickelkern (11) positioniert werden, um durch die daran anschließenden Verfahrensschritte mit den Fasern verbunden zu werden, um mit dem Faserverbundteil ein einstückiges Bauteil zu bilden.

4. Verfahren zur Herstellung einer Lenksäule (1) nach Anspruch 1 bis 3, **dadurch gekennzeichnet, dass** in einem Verfahrensschritt vor dem Wickeln ein Hilfsmaterial auf den Wickelkern (11) aufgebracht wird, das die Fasern in Form und Lage hält bis diese durch Aushärten des Harzes fixiert sind.

5. Lenksäule (1) für ein Kraftfahrzeug mit einer in einer Manteleinheit (3) um eine Längsachse drehbar gelagerten Lenkspindel (2), wobei die Manteleinheit (3) in einer Konsole, die dazu ausgebildet ist, die Manteleinheit (3) mit einer Karosserie des Kraftfahrzeuges zu verbinden, gelagert ist, **dadurch gekennzeichnet, dass** mindestens ein Bauteil der Lenksäule (1) aus einem faserverstärkten Verbundwerkstoff nach einem Verfahren gemäß einem der Ansprüche 1 bis 4 gefertigt ist.

6. Lenksäule (1) nach Anspruch 5, **dadurch gekennzeichnet, dass** das Bauteil im Kraftfluss der Lenksäule (1) zwischen der Lenkspindel (2) und der Karosserie liegt und entlang des Kraftflusses aus faserverstärkten Kunststoff, bei dem die Fasern gewickelt sind, gebildet ist.

7. Lenksäule (1) nach einem der Ansprüche 5 oder 6, **dadurch gekennzeichnet, dass** der faserverstärkte Kunststoff eine Kombination verschiedenartiger Faserstrukturen mit gleichgerichteten Fasern aufweist.

8. Lenksäule (1) nach einem der vorhergehenden Ansprüche 5 bis 7, **dadurch gekennzeichnet, dass** das Bauteil unter Verwendung eines Wickelkerns (11) gefertigt ist, der vor der Montage des Bauteils in der Lenksäule von dem Bauteil getrennt und nicht in der Lenksäule enthalten ist.

9. Lenksäule (1) nach Anspruch 8, **dadurch gekennzeichnet, dass** das Bauteil (14) eine Anzahl von Funktionselementen (13) aufweist, die nach dem Wickelvorgang und dem Aushärten mit dem faserverstärkten Kunststoff fest verbunden sind.

10. Lenksäule (1) nach Anspruch 9, **dadurch gekennzeichnet, dass** die Funktionselemente (13) ausgewählt sind aus der Gruppe, die Befestigungselemente (77), Führungen, Bewegungsbegrenzungen, Lager (20) und Halter für Kabelbäume umfasst.

## Claims

1. Method for producing a steering column (1) having a steering spindle (2) which, so as to be rotatable about the axis thereof, is mounted in a casing unit (3), wherein the casing unit (3) is mounted in a console which is configured for connecting the casing unit (3) directly or indirectly to the body of the motor vehicle, and wherein at least one of the components of the steering column (1) is configured as a fibre-composite component, said method comprising the following steps:
a) winding fibres along predefined paths about at least one winding spool (12) of a winding core (11) ;
b) incorporating a curable resin into the fibres;
c) curing the resin and forming the fibre-composite component;
d) retrieving the at least one winding spool (12) inwardly into the winding core (11);
e) retrieving the winding core (11) and releasing the fibre-composite component;
f) assembling the steering column (1) while installing the fibre-composite component in the steering column.

2. Method for producing a steering column (1) having a steering spindle (2) which, so as to be rotatable about the axis thereof, is mounted in a casing unit (3), wherein the casing unit (3) is mounted in a console which is configured for connecting the casing unit (3) directly or indirectly to the body of the motor vehicle, and wherein at least one of the components of the steering column (1) is configured as a fibre-composite component, said method comprising the following steps:
a) winding fibres (14) along predefined paths about at least one winding spool (12) of a winding core (11), wherein the fibres (14) are soaked with a curable resin;
b) curing the resin and forming the fibre-composite component;
c) retrieving the at least one winding spool (12) inwardly into the winding core (11);
d) retrieving the winding core (11) and releasing the fibre-composite component;
e) assembling the steering column (1) while installing the fibre-composite component in the steering column.

3. Method for producing a steering column (1) according to Claim 1 or 2, **characterized in that,** in a method step prior to the winding, one or a plurality of functional elements (13) are positioned at predefined locations on the winding core (11) so as to be connected to the fibres by the method steps following thereafter, so as to form a component that is integral to the fibre-composite component.

4. Method for producing a steering column (1) according to Claims 1 to 3, **characterized in that,** in a method step prior to the winding, an auxiliary material which keeps the fibres in shape and position until said fibres are set by curing the resin is applied to the winding core (11).

5. Steering column (1) for a motor vehicle, having a steering spindle (2) which is mounted in a casing unit (3) so as to be rotatable about a longitudinal axis, wherein the casing unit (3) is mounted in a console which is configured for connecting the casing unit (3) to a body of the motor vehicle, **characterized in that** at least one component of the steering column (1) is made from a fibre-reinforced composite material as per a method according to one of Claims 1 to 4.

6. Steering column (1) according to Claim 5, **characterized in that** the component lies in the force flux of the steering column (1), between the steering spindle (2) and the body, and along the force flux is formed from fibre-reinforced plastics material in which the fibres are wound.

7. Steering column (1) according to either of Claims 5 and 6, **characterized in that** the fibre-reinforced plastics material includes a combination of dissimilar fibre structures having identically aligned fibres.

8. Steering column (1) according to one of the preceding Claims 5 to 7, **characterized in that** the component is made while using a winding core (11) which prior to the assembly of the component in the steering column is separated from the component and is not contained in the steering column.

9. Steering column (1) according to Claim 8, **characterized in that** the component (14) comprises a number of functional elements (13) which, after the winding procedure and the curing, are fixedly connected to the fibre-reinforced plastics material.

10. Steering column (1) according to Claim 9, **characterized in that** the functional elements (13) are selected from the group which includes fastening elements (77), guides, movement restrictors, bearings (20), and holders for wire harnesses.

## Revendications

1. Procédé de fabrication d'une colonne de direction (1) comprenant un arbre de direction (2) qui est monté dans une unité d'enveloppe (3) de manière à pouvoir tourner sur son axe, l'unité d'enveloppe (3) étant montée dans un support qui est adapté pour relier l'unité d'enveloppe (3) directement ou indirectement à la carrosserie du véhicule automobile, et au moins un des composants de la colonne de direction (1) étant conçu comme composant composite renforcé par des fibres, le procédé comprenant les étapes suivantes :
a) enrouler des fibres le long de chemins prédéterminés autour d'au moins une bobine d'enroulement (12) d'un noyau d'enroulement (11) ;
b) introduire une résine durcissable dans les fibres ;
c) faire durcir la résine et former le composant composite renforcés par des fibres ;
d) retirer l'au moins une bobine d'enroulement (12) vers l'intérieur jusque dans le noyau d'enroulement (11) ;
e) retirer le noyau d'enroulement (11) et libérer le composant composite renforcé par des fibres ;
f) monter la colonne de direction (1) avec incorporation du composant composite renforcé par des fibres dans la colonne de direction.

2. Procédé de fabrication d'une colonne de direction (1) comprenant un arbre de direction (2) qui est monté dans une unité d'enveloppe (3) de manière pouvoir tourner sur son axe, l'unité d'enveloppe (3) étant montée dans un support qui est conçu pour relier l'unité d'enveloppe (3) directement ou indirectement à la carrosserie du véhicule automobile, et
au moins un des composants de la colonne de direction (1) étant conçu comme un composant composite renforcé par des fibres, le procédé comprenant les étapes suivantes :
a) enrouler des fibres (14) le long de chemins prédéterminés autour d'au moins une bobine d'enroulement (12) d'un noyau d'enroulement (11), les fibres (14) étant imprégnées d'une résine thermodurcissable ;
b) faire durcir la résine et former le composant composite renforcé par des fibres ;
c) retirer au moins une bobine d'enroulement (12) vers l'intérieur jusque dans le noyau d'enroulement (11) ;
d) retirer le noyau d'enroulement (11) et libérer le composant composite renforcé par des fibres ;
e) monter la colonne de direction (1) avec incorporation du composant composite renforcé par des fibres dans la colonne de direction.

3. Procédé de fabrication d'une colonne de direction (1) selon la revendication 1 ou 2, **caractérisé en ce que** dans une étape de procédé, avant l'enroulement, au moins un élément fonctionnel (13) est positionné à des emplacements prédéfinis sur le noyau d'enroulement (11) pour être lié aux fibres par les étapes de procédé suivantes afin de former un composant d'une seule pièce avec le composant composite renforcé par des fibres.

4. Procédé de fabrication d'une colonne de direction (1) selon l'une des revendications 1 à 3, **caractérisé en ce que** dans une étape de procédé, avant l'enroulement, un matériau auxiliaire est appliqué sur le noyau d'enroulement (11) qui maintient les fibres en forme et en position jusqu'à ce que celles-ci soit fixées par le durcissement de la résine.

5. Colonne de direction (1) destinée à un véhicule automobile et comprenant un arbre de direction (2) monté de manière à pouvoir tourner sur un axe longitudinal dans l'unité d'enveloppe (3), l'unité d'enveloppe (3) étant montée dans un support conçu pour relier l'unité d'enveloppe (3) à une carrosserie du véhicule automobile, **caractérisée en ce qu'**au moins un composant de la colonne de direction (1) est fabriqué à partir d'un matériau composite renforcé par des fibres selon un procédé de l'une des revendications 1 à 4.

6. Colonne de direction (1) selon la revendication 5, **caractérisée en ce que** le composant est situé, dans le flux de force de la colonne de direction (1), entre l'arbre de direction (2) et le corps et est formé le long du flux de force à partir d'une matière synthétique renforcée par des fibres dans laquelle les fibres sont enroulées.

7. Colonne de direction (1) selon l'une des revendications 5 ou 6, **caractérisée en ce que** la matière synthétique renforcée par des fibres comporte une combinaison de différents types de structures de fibres comportant des fibres de même orientation.

8. Colonne de direction (1) selon l'une des revendications précédentes 5 à 7, **caractérisée en ce que** le composant est fabriqué à l'aide d'un noyau d'enroulement (11) qui est séparé du composant avant le montage du composant dans la colonne de direction et qui n'est pas contenu dans la colonne de direction.

9. Colonne de direction (1) selon la revendication 8, **caractérisée en ce que** le composant (14) comporte un certain nombre d'éléments fonctionnels (13) qui sont reliés de manière fixe à la matière synthétique renforcée par des fibres après le processus d'enroulement et le durcissement.

10. Colonne de direction (1) selon la revendication 9, **caractérisée en ce que** les éléments fonctionnels (13) sont choisis dans le groupe comprenant les éléments de fixation (77), les guides, les limites de déplacement, les paliers (20) et les supports de faisceaux de câbles.
